# EUROPÄISCHE PATENTSCHRIFT

(11) **EP 0 639 864 B1**
(45) Veröffentlichungstag und Bekanntmachung des Hinweises auf die Patenterteilung: **27.11.1996**
(21) Anmeldenummer: 94108019.4
(22) Anmeldetag: 25.05.1994
(51) Int. Cl.: H01M 2/28, H01M 10/04

(54) **Elektrischer Akkumulator**
Electric storage battery
Accumulateur électrique

(30) Priorität: 13.08.1993 DE 4327183
(43) Veröffentlichungstag der Anmeldung: 22.02.1995
(73) Patentinhaber: VARTA Batterie Aktiengesellschaft, 30419 Hannover (DE)
(72) Erfinder: Meissner, Eberhard, Dr., D-65719 Hofheim (DE); Tönnessen, Albert, Dr., D-65510 Idstein (DE)
(74) Vertreter: Kaiser, Dieter Ralf, Dipl.-Ing.

(56) Entgegenhaltungen:
- EP-A- 0 244 943

## Beschreibung

Die Erfindung betrifft einen elektrischen Akkumulator mit mindestens einer Zelle, mit jeweils einem Plattenblock, mit mindestens einer positiven und einer negativen Elektrode, die zur Ableitung des elektrischen Stromes Ableiterfahnen besitzen, und mit je einer Stromsammelschiene für jede Elektrodenpolarität, welche die Ableiterfahnen jeweils gleichpoliger Elektroden mit einem Endpol oder mit Anschlußelementen einer benachbarten Zelle verbinden.

In seiner allgemeinen Ausführung enthält ein elektrischer Akkumulator in einem mit Elektrolyt gefüllten Zellengefäß zumeist mehrere positive und negative Elektrodenplatten von rechteckigem Querschnitt, die im Wechsel ihrer Polaritäten und durch zwischenliegende Separatoren elektrisch voneinander isoliert eine Stapelanordnung bilden. Der komplette Plattenblock ist außerdem so geordnet, daß sich die Stromableiterfahnen aller positiven Elektroden an dem einen Rand und die Stromableiterfahnen aller negativen Elektroden an dem gegenüberliegenden Rand der Oberseite des Plattenblocks befinden. Auf diese Weise lassen sich, z. B. durch Löten, Schweißen oder Verschrauben, alle positiven Fahnen an eine gemeinsame positive Stromsammelschiene und ebenso alle negativen Fahnen an eine gemeinsame negative Stromsammelschiene mechanisch und elektrisch leicht anschließen während die Stromsammmelschienen, auch Stromkollektoren genannt, ihrerseits die Verbindung zu den jeweiligen Endpolen des Akkumulators herstellen. Speziell beim Bleiakkumulator, haben die Stromkollektoren oder Stromsammelschienen ihre charakterische Ausprägung als Polbrücke erhalten.

Bei mehrzelligen Akkumulatoren müssen die Polbrücken auch die Brückenfunktion zu einer Nachbarzelle übernehmen, wobei sie beim Durchtritt durch die Zellentrennwand bei in Serie geschalteten Zellen entsprechend den für diese Schaltungsart geltenden elektrischen Regeln ihre Polarität wechseln, d. h. die Stromsammelschiene für die Stromableiter aller positiven Elektroden in der einen Zelle wird mit ihrem in die Nachbarzelle ragenden Teil zur Stromsammelschiene für die Ableiterfahnen aller dort vorhandenen negativen Elektroden.

Oft sind die Stromsammelschienen jedoch geteilt und ihre Hälften im Bereich der Zellentrennwand durch metallische Übergangsstücke (Zellenverbinder) verbunden, weil sich mit deren Hilfe eine elektrolytdichte Durchführung durch die Trennwand technisch leichter realisieren läßt.

In aller Regel liegen die beiden Stromsammelschienen bzw. Polbrücken einer Akkumulatorenzelle parallel zueinander an den Rändern des Plattenblocks oder auch gleichmäßig zur Mitte hin verschoben.

Diese Anordnung der Stromsammelschienen hat zur Konsequenz, daß bei Blockbatterien mit mehreren Einzelzellen in einem gemeinsamen Gefäß die Stromsammelschienen benachbarter Zellen, obwohl zu unterschiedlicher Polarität gehörig, in einer Reihe angeordnet sind.

Aus der EP-PS 264862 ist auch eine symmetrische Anordnung von drei Stromsammelschienen, nämlich einer auf einer Mittellinie liegenden Schiene der einen Polarität und zwei beiderseits der Mittellinie im Abstand angeordneten Schienen für die andere Polarität bei einer Bleibatterie bekannt.

Diese Anordnung rührt daher, daß alle positiven Elektroden einer Zelle jeweils zwei schmale Ableiterfahnen nahe den Enden ihrer Oberkante besitzen, denen entsprechend schmale Stromsammelschienen zugeordnet sind, während alle negativen Elektroden der gleichen Zelle nur jeweils eine Ableiterfahne, jedoch von doppelter Breite und mit der Position in der Mitte der Elektrodenoberkante aufweisen, wobei die zugehörige Stromsammelschiene mittig zwischen den beiden anderen verläuft und breiter als jene ausgebildet ist. In einer Nachbarzelle muß jedoch bei Serienverschaltung aus den weiter vorn erörterten Gründen die breite Stromsammelschiene alle positiven Elektroden und es müssen die beiden äußeren schmalen Stromsammelschienen alle negativen Elektroden erfassen. Das bedeutet, daß positive und negative Elektroden einmal zwei seitliche Fahnen, das andere Mal eine breite Fahne in der Mitte aufweisen müssen, was vier verschiedene Ausführungen von Elektroden notwendig macht. Die Fertigung einer solchen Batterie ist dadurch aufwendig und die Montage nicht unproblematisch.

Der Erfindung liegt die Aufgabe zugrunde, die elektrischen Eigenschaften eines Akkumulators nach dem eingangs formulierten Gattungsbegriff zu verbessern.

Die Aufgabe wird erfindungsgemäß durch einen elektrischen Akkumulator gelöst, wie er im Patentanspruch 1 definiert ist.

Der neue Akkumulator unterscheidet sich danach von den üblichen Ausführungen mit zwei symmetrisch zueinander auf der Oberseite des Plattenblocks, jedoch nahe seinen Rändern, angeordneten Stromsammelschienen dadurch, daß diejenige für die Elektroden der einen Polarität in die Mitte gelegt ist und diejenige für die Elektroden der anderen Polarität in einem gewissen Abstand von der Mitte parallel zu der ersteren Stromsammelschiene verläuft. Entsprechend sind alle Ableiterfahnen der einen Elektrodenspezies, rechteckige Elektrodenformen vorausgesetzt, in der Mitte der Elektrodenoberkante und alle Ableiterfahnen der anderen Elektrodenspezies an einer Stelle der Oberkante, die sich zwischen der Mitte und dem Elektrodenrand befindet, angebracht.

Es hat sich nämlich gezeigt, daß bei rechteckigen Elektroden eine Position der Ableiterfahnen in der Mitte einer Elektrodenseite zu einem niedrigeren elektrischen Widerstand führt und diese Position daher günstiger ist als die sonst übliche weiter am Rand.

Hierzu muß man sich vorstellen, daß der über die ganze Fläche der Elektrode senkrecht eintretende Strom von der Ableiterstruktur in der Elektrodenebene gesammelt und zum Ableiteranschluß geführt wird, wobei dessen Position am Rande der Elektrode mitbestimmend ist für den elektrischen Innenwiderstand einer elektrochemischen Zelle. Denn mit jedem Stromleitungsweg zum Ableiteranschluß ist ein ohmscher Spannungsabfall verbunden, der bei höheren elektrischen Belastungen der Zelle deren Eigenschaften beeinträchtigt. Dem kann aber, wie aus verschiedenen Arbeiten bekannt, durch günstige Anordnung der Ableiterfahne entgegengewirkt werden.

Allerdings läßt sich bei zwei verschiedenpoligen Stromsammelschienen eine Position derselben über der Mitte einer Seite des Plattenblocks nicht für beide Schienen gleichzeitig realisieren, jedenfalls dann nicht, wenn die positiven und die negativen Stromsammelschienen auf der gleichen Seite (üblicherweise die Oberseite) des Plattenblocks angeordnet werden sollen.

Bei dem erfindungsgemäßen Akkumulator ist nun eine Kompromißlösung vorgesehen, dergestalt, daß die eine Stromsammelschiene über der Mitte und die andere Stromsammelschiene daneben, jedoch so nahe an der ersten, daß noch ein ausreichender Isolationsabstand vorhanden ist, angeordnet wird. Die korrespondierenden Bauteile der beiden Polaritäten haben also eine asymmetrische Konfiguration. Anhand zweier Figuren wird die Erfindung verdeutlicht.

Figur 1 zeigt einen dreizelligen Akkumulator mit einer möglichen Anordnung der positiven und negativen Stromsammelschienen gemäß Erfindung.

Figur 2 zeigt den Akkumulator von Figur 1 mit einer alternativen Anordnung der positiven und negativen Stromsammelschienen gemäß Erfindung.

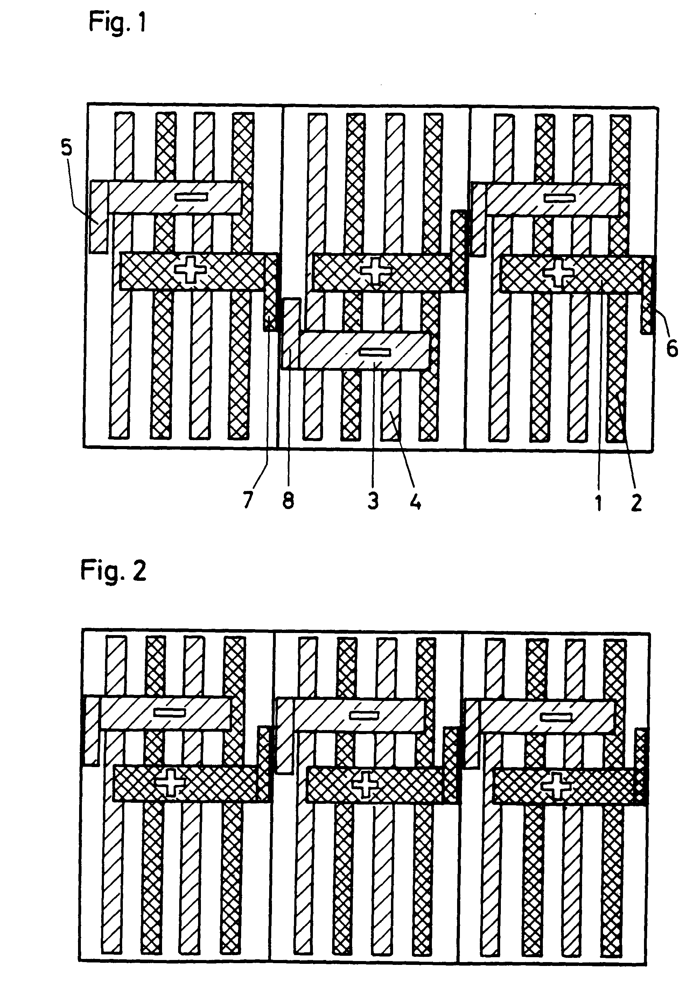

Nach Figur 1 sind die mittig liegenden Stromsammelschienen 1 mit den Anschlußfahnen der positiven Elektroden 2 und die daneben liegenden Stromsammelschienen 3 mit den Anschlußfahnen der negativen Elektroden 4 verbunden. Dargestellt sind ferner als Anschlußteile dienende Zellenendpole 5,6 sowie Zellenverbinder 7,8.

Diese Anschlußkomponenten können erfindungsgemäß bei der positiven Polarität auf der den negativen Stromsammelschienen abgewandten, die der negativen Polarität dagegen auf der den positiven Stromsammelschienen zugewandten Seite angeordnet sein. In diesem Fall müssen die negativen Stromsammelschienen von Zelle zu Zelle die Seite wechseln.

Eine besonders vorteilhafte Anordnung ergibt sich erfindungsgemäß jedoch dann, wenn, wie in Figur 2 dargestellt, die Anschlußkomponenten der einen Polarität stets der Seite der gegenpoligen Stromsammelschiene zugewandt sind, da in diesem Falle die positive und die negative Stromsammelschiene ihre Position von Zelle zu Zelle nicht verändern.

Ein dem erfindungsgemäßen Konstruktionsprinzip besonders gut zugänglicher Akkumulator ist der Blei-Säure-Akkumulator. Er besitzt im allgemeinen flächig ausgedehnte Elektroden mit einer stromtragenden Ableiterstruktur und darauf aufgebrachten aktiven Massen. Typische Elektrodenbauformen sind pastierte Elektroden, bei denen die aktive Masse in den Zwischenräumen einer gitterförmigen Ableiterstruktur eingebracht ist, Panzerplatten, bei denen die aktive Masse mehrere parallel zueinander verlaufende, an einem Ende mit einem Joch verbundene Ableiterdrähte jeweils zylinderförmig umgibt oder Großoberflächen-platten, bei denen die aktive Masse durch Korrosionsreaktionen auf der im allgemeinen profilierten Oberfläche einer gegossenen Bleistruktur gebildet wurde.

Allen diesen üblichen Bauformen ist ein als Fahne ausgebildeter Ableiteranschluß gemeinsam.

Bei einem Bleiakkumulator ist es erfindungsgemäß besonders günstig, wenn die in der Mitte angeordnete Stromsammelschiene (Polbrücke) diejenige für die Ableiterfahnen der positiven Bleidioxidelektroden und die seitlich der Mitte angeordnete Stromsammelschiene diejenige für die Ableiterfahnen der negativen Bleielektroden ist. Mit anderen Worten: Es würde der mit einer Fahnenposition außerhalb der Mitte der Elektrodenoberkante verbundene elektrische Nachteil für die positive Elektrode stärker ins Gewicht fallen als für die negative Elektrode. Dies erklärt sich aus der vergleichsweise guten elektrischen Leitfähigkeit der negativen aktiven Masse von ca. 2000 Ohm⁻¹ x cm⁻¹ (Schwammblei), verglichen mit der um eine Größenordnung geringeren der positiven aktiven Masse aus porösem Bleidioxid von nur 135 Ohm⁻¹ x cm⁻¹ (siehe bei H. Metzendorf, J. Power Sources 7 (1982) S. 281 - 291).

Speziell für den Bleiakkumulator hat dies die überraschende Konsequenz, daß sich für eine Anordnung der Ableiterfahnen, bei der sich die positiven Ableiterfahnen mehr in der Elektrodenmitte befinden und die negativen entsprechend weiter außen, ein geringerer elektrischer Widerstand ergibt als bei der heute üblichen symmetrischen Anordnung.

Eine Bemessungsregel für die Größe des freien Abstandes zwischen den Stromsammelschienen läßt sich nicht angeben, weil diese von konstruktiven und werkzeugtechnischen Gegebenheiten, nicht zuletzt auch von Sicherheitserwägungen, abhängt. Es liegt aber im Sinne der Erfindung, diesen Abstand so klein wie möglich zu halten.

Mit Rücksicht auf das gefürchtete Gitterwachstum bei positiven Bleidioxidelektroden, durch welches die Elektrode eine nennenswerte Flächenausdehnung in vertikaler Richtung erfahren kann, ist es erfindungsgemäß von Vorteil, die negative Stromsammelschiene so anzuordnen, daß ihre Unterkante um mindestens 0,3 cm, vorzugsweise mehr als 0,5 cm höher liegt als die Unterkante der positiven Stromsammelschiene.

Nur zur allgemeinen Orientierung möge das nachstehende Beispiel dienen:

Ein Starterakkumulator besitzt Elektroden von typisch etwa 15 cm Breite und etwa 11 cm Höhe. Die Ableiterfahne hat eine Breite von typisch 1,5 cm. Unterstellt man einen fertigungstechnischen Mindestabstand der Stromsammelschienen von 2 cm, so erstrecken sich bei günstiger Anordnung die Ableiterfahnen (1,5 cm breit) von 5 cm bis 6,5 cm vom jeweils näherliegenden Elektrodenrand, während der Mittelbereich von 6,5 cm bis 8,5 cm frei bleibt. Drückt man diesen Sachverhalt in Prozenten der Breite der Elektrode aus, so sind in diesem Beispiel die Bereiche von 0 % - 33 % und von 67 % - 100 % der Breite frei, während sich von 33 % - 43 % die Ableiterfahnen der einen und von 57 % - 67 % die der anderen Polarität erstrecken. Der Bereich von 43 % - 57 % ist aus den oben genannten technischen Gründen ebenfalls frei.

Bei einem erfindungsgemäßen Starterakkumulator sollten daher die positiven Ableiterfahnen und Stromsammelschienen, wenn deren Breite 7 bis 10 % der Breite der positiven Elektrode ausmacht, zumindest mit ihrem Rand über der Mitte der Oberseite des Plattenblocks liegen. Mit anderen Worten: Die Elektrodenmitte (50 % der Breite) sollte zumindest in den Bereich der Fahne der positiven Elektrode fallen.

Für die möglichst widerstandsarme Stromableitung aus dem Aktivmaterial der Elektroden ist auch die Qualität ihrer Gerüststruktur von großer Bedeutung. Bei Bleielektroden kommen Ableitergerüste aus "Streckmetall", die durch Strecken eines Bleches hergestellt werden, oder gegossene Gitterstrukturen in Frage, wobei letztere im Fall der positiven Elektrode aus Blei oder Legierungen des Bleis mit mindestens 90 Gew.% Blei-Anteil bestehen. Anstelle von Antimon als Legierungspartner können entweder 0,01 % bis 0,12 % Calcium oder 0,05 % bis 5 % Zinn, gegebenenfalls auch beide Komponenten in den nämlichen Mengenbereichen zugegen sein. Neben diesen Bestandteilen kann die Gitterlegierung noch bis zu 2 Gew. % an weiteren Elementen enthalten.

Neben den erwähnten günstigen elektrischen Eigenschaften besitzt der erfindungsgemäße Akkumulator den Vorteil, daß er aus Elektroden aufgebaut ist, die aufgrund ihrer polaritätsabhängigen Fahnen-Anordnung - Mitte der Elektrodenoberkante bei der einen Polarität, seitlich von der Mitte bei der anderen Polarität - nicht verwechselt werden können. Bei der Batteriemontage, wenn diese nach dem Beispiel der Figur 2 durchgeführt wird, ergibt sich eine zusätzliche Vereinfachung dadurch, daß die positiven und die negativen Stromsammelschienen untereinander von Zelle zu Zelle fluchten, so daß die Elektrodensätze nicht jedesmal um 180° gewendet werden müssen.

## Patentansprüche

1. Elektrischer Akkumulator mit mindestens einer Zelle, mit jeweils einem Plattenblock, mit mindestens einer positiven und einer negativen Elektrode, die zur Ableitung des elektrischen Stromes Ableiterfahnen besitzen, und mit je einer Stromsammelschiene für jede Elektrodenpolarität, welche die Ableiterfahnen jeweils gleichpoliger Elektroden mit einem Endpol oder mit Anschlußelementen einer benachbarten Zelle verbinden, dadurch gekennzeichnet, daß die Stromsammelschiene mit den Ableiterfahnen der einen Elektrodenpolarität etwa in der Mitte einer Seite des Plattenblocks und die Stromsammelschiene mit den Ableiterfahnen der anderen Elektrodenpolarität asymmetrisch daneben angeordnet ist.

2. Elektrischer Akkumulator nach Anspruch 1, dadurch gekennzeichnet, daß zwischen den beiden Stromsammelschienen ein ausreichender Isolationsabstand vorgesehen ist.

3. Elektrischer Akkumulator nach einem der Ansprüche 1 oder 2, dadurch gekennzeichnet, daß die mittige Stromsammelschiene derjenigen Elektrodenpolarität zugeordnet ist, deren aktives Material das geringere spezifische elektrische Leitvermögen besitzt.

4. Elektrischer Akkumulator nach einem der Ansprüche 1 bis 3, dadurch gekennzeichnet, daß die mittige Stromsammelschiene zumindest mit ihrem Rand über der Mitte der Oberseite des Plattenblocks angeordnet ist.

5. Elektrischer Akkumulator nach einem der Ansprüche 1 bis 4, dadurch gekennzeichnet, daß die mittige Stromsammelschiene eine Breite besitzt, die zwischen 5% und 15% vorzugsweise zwischen 7 % und 10 % der Elektrodenbreite liegt.

6. Elektrischer Akkumulator nach einem der Ansprüche 1 bis 5, dadurch gekennzeichnet, daß er ein Bleiakkumulator ist.

7. Elektrischer Akkumulator nach Anspruch 6, dadurch gekennzeichnet, daß die positiven Elektroden eine Ableiterstruktur in Form eines gegossenen Gitters oder eines Streckmetallgitters besitzen, das aus einer antimonfreien Blei-Calcium-Legierung besteht.

8. Elektrischer Akkumulator nach einem der Ansprüche 6 oder 7, dadurch gekennzeichnet, daß die mit der Stromsammelschiene verbundenen stromableitenden Anschlußteile wie Zellenendpole oder solche zur Verbindung von Zelle zu Zelle bei der positiven Polarität auf der den negativen Stromsammelschienen abgewandten, bei der negativen Polarität dagegen auf der den positiven Stromsammelschienen zugewandten Seite angeordnet sind.

9. Elektrischer Akkumulator nach einem der Ansprüche 6 bis 8, dadurch gekennzeichnet, daß die mit der Stromsammelschiene verbundenen stromableitenden Anschlußteile wie Zellenendpole oder solche zur Verbindung von Zelle zu Zelle bei der positiven Polarität stets der Seite der negativen Stromsammelschiene und bei der negativen Polarität stets der Seite der positiven Stromsammelschiene zugewandt sind.

10. Elektrischer Akkumulator nach einem der Ansprüche 6 bis 9, dadurch gekennzeichnet, daß die Unterkante der negativen Stromsammelschiene um mindestens 0,3 cm, vorzugsweise um mindestens 0,5 cm höher angeordnet ist als die der positiven Stromsammelschiene und die negativen Ableiterfahnen entsprechend länger als die positiven ausgeführt sind.

## Claims

1. An electrical accumulator having at least one cell, in each case having a plate pack, having at least one positive and one negative electrode which have diverter lugs for diverting the electrical current, and each having a bus-bar for each electrode polarity which connects the diverter lugs of electrodes in each case of the same pole to a terminal or to connecting elements of a neighbouring cell, characterized in that the bus-bar having the diverter lugs of the one electrode polarity is arranged approximately in the centre of one side of the plate pack, and the bus-bar having the diverter lugs of the other electrode polarity is arranged asymmetrically next to it.

2. An electrical accumulator according to Claim 1, characterized in that an adequate spacing for insulation is provided between the two bus-bars.

3. An electrical accumulator according to either of Claims 1 or 2, characterized in that the central bus-bar is associated with the electrode polarity whereof the active material has the lower electrical conductivity.

4. An electrical accumulator according to one of Claims 1 to 3, characterized in that the central bus-bar is arranged at least with its edge over the centre of the upper side of the plate pack.

5. An electrical accumulator according to one of Claims 1 to 4, characterized in that the central bus-bar has a width between 5% and 15%, preferably between 7% and 10%, of the electrode width.

6. An electrical accumulator according to one of Claims 1 to 5, characterized in that it is a lead accumulator.

7. An electrical accumulator according to Claim 6, characterized in that the positive electrodes have a diverter structure in the form of a cast grid or an expanded-metal grid made from an antimony-free lead-calcium alloy.

8. An electrical accumulator according to either of Claims 6 or 7, characterized in that the current-diverting connecting parts connected to the bus-bar, such as cell terminals or those for connecting from one cell to the next, are arranged on the side away from the negative bus-bars in the case of positive polarity and on the other hand are arranged on the side facing the positive bus-bars in the case of negative polarity.

9. An electrical accumulator according to one of Claims 6 to 8, characterized in that the current-diverting connecting parts connected to the bus-bar such as cell terminals or those for connecting from one cell to the next are always facing the side with the negative bus-bar in the case of positive polarity and are always facing the side with the positive bus-bar in the case of negative polarity.

10. An electrical accumulator according to one of Claims 6 to 9, characterized in that the underside of the negative bus-bar is arranged at least 0.3 cm, preferably at least 0.5 cm, higher up than that of the positive bus-bar, and the negative diverter lugs are constructed to be correspondingly longer than the positive ones.

## Revendications

1. Accumulateur électrique comprenant au moins une cellule avec un bloc de plaques ayant au moins une électrode positive et une électrode négative munies de pattes conductrices de courant électrique et un rail collecteur de courant pour chaque polarité d'électrodes reliant les pattes conductrices des électrodes de même polarité à un pôle de sortie ou à des éléments de branchement d'une cellule voisine,
caractérisé en ce que
le rail collecteur de courant avec les pattes conductrices d'une polarité d'électrodes est prévu sensiblement au milieu d'un côté du bloc de plaques et le rail collecteur de courant avec les pattes conductrices de l'autre polarité d'électrodes est disposé à côté de manière non symétrique.

2. Accumulateur électrique selon la revendication 1,
caractérisé en ce que
entre les deux rails collecteurs de courant, il y a un intervalle d'isolation suffisant.

3. Accumulateur électrique selon l'une des revendications 1 ou 2,
caractérisé en ce que
le rail collecteur de courant du milieu est attribué à la polarité des électrodes dont la matière active possède la conductivité électrique spécifique la plus faible.

4. Accumulateur électrique selon l'une des revendications 1 à 3,
caractérisé en ce que
le rail collecteur de courant, du milieu se trouve au moins avec son bord au-dessus du milieu du côté supérieur du bloc de plaques.

5. Accumulateur électrique selon l'une des revendications 1 à 4,
caractérisé en ce que
le rail collecteur de courant du milieu a une larguer comprise entre 5 % et 15 % de préférence entre 7 % et 10 % de la largeur des électrodes.

6. Accumulateur électrique selon l'une des revendications 1 à 5,
caractérisé en ce que
l'accumulateur est au plomb.

7. Accumulateur électrique selon la revendication 6
caractérisé en ce que
les électrodes positives ont une structure de sortie de courant en forme de grille coulée ou d'une grille de métal étiré en un alliage plomb/calcium sans antimoine.

8. Accumulateur électrique selon l'une des revendications 6 ou 7,
caractérisé en ce que
les parties de branchement conductrices de courant reliées au rail collecteur de courant tel que les pôles d'extrémité des cellules ou liaison de cellule à cellule pour la polarité positive sont prévues sur le côté opposé au rail collecteur de courant négatif et pour la polarité négative par contre sur le côté tourné vers le rail collecteur de courant positif.

9. Accumulateur électrique selon l'une des revendications 6 à 8,
caractérisé en ce que
les parties de branchement conductrices de courant reliées au rail collecteur tel que les pôles d'extrémité de cellules ou servant la liaison d'une cellule à l'autre pour la polarité positive sont toujours tournées vers le côté du rail collecteur de courant négatif et pour la polarité négative, toujours du côté du rail collecteur de courant positif.

10. Accumulateur électrique selon l'une des revendications 6 à 9,
caractérisé en ce que
le bord inférieur du rail collecteur de courant négatif est relevé d'au moins 0,3 cm et de préférence d'au moins 0,5 cm par rapport au rail collecteur positif et les pattes conductrices négatives sont rallongées d'autant par rapport aux pattes conductrices positives.
